# EUROPEAN PATENT APPLICATION

(11) **EP 2 530 622 A2**
(43) Date of publication of application: **05.12.2012**
(21) Application number: 11180892.9
(22) Date of filing: 12.09.2011
(51) Int. Cl.: G06K 9/22

(54) **Image display program, image display apparatus, image display method, and image display system**

(30) Priority: 01.06.2011 JP 2011123218
(71) Applicant: Nintendo Co., Ltd., Kyoto 601-8501 (JP)
(72) Inventor: Sakurai, Masahiro, Tokyo, 102-0071 (JP); Yamagishi, Nobumasa, Fuchuu-shi, Tokyo, 183-0016 (JP)
(74) Representative: Lang, Johannes

(57) **Abstract**

A content of an image corresponding to a recognition object in a captured image is identified, and first identification information and second identification information are acquired. Based on the first identification information and second identification information, one display object is determined from a plurality of virtual objects stored in advance in a predetermined storage medium. Then, an image of the determined virtual object captured by a virtual camera is displayed on a predetermined display section.

## Description

### CROSS REFERENCE TO RELATED APPLICATION

The disclosure of Japanese Patent Application No. 2011-123218, filed on June 1, 2011, is incorporated herein by reference.

### BACKGROUND OF THE INVENTION

### Field of the Invention

The present invention relates to an image display program for displaying a virtual object, and more particularly, relates to marker identification in marker-type AR and a display process for a virtual object.

### Description of the Background Art

Conventionally, as a technology relating to so-called AR (Augmented Reality), an AR technology using a marker (marker-type AR) is known (for example, Hirokazu Kato, Mark Billinghurst, Koichi Asano, and Keihachiro Tachibana, "An Augmented Reality System and its Calibration based on Marker Tracking", Journal of the Virtual Reality Society of Japan, Vol. 4 (1999), No. 4). With respect to the marker, there are cases where the marker is provided as, for example, a "card" having about the size of a typical card used in playing cards. On such a card, for example, a relatively simple symbol is drawn, and when an image of the card is captured, for example, by a predetermined game apparatus, a combined image obtained by combining a real image with a 3D model virtual object corresponding to the symbol drawn on the card is displayed on a screen of the game apparatus. In a case where such a process is performed, it can be considered that the symbol drawn on the card is identified by use of a so-called pattern matching technique, thereby determining a virtual object corresponding to the symbol. It is considered that, in such a pattern matching process, a threshold value indicating the degree of coincidence is set, and whether an value obtained through the pattern matching exceeds the threshold value is determined, thereby determining whether the card can be recognized.

However, in a case where the symbol described above is identified by means of pattern matching, if the threshold value is set to a high value, for example, when an image of a card is captured, the card that should be properly recognized may not be recognized depending on the conditions and the like such as surrounding light (ambient light) at that time. Meanwhile, if the threshold value is set to a low value, there is a problem in that although the recognition accuracy is improved with respect to the card that should be properly recognized, a card that should not be recognized is also recognized as the right card. That is, the applicant has noticed that, even when an image of a completely different card is captured, the different card may be handled in a similar manner to that for the card that should be properly recognized.

### SUMMARY OF THE INVENTION

Therefore, an object of the present invention is to provide an image display program, an image display apparatus, an image display method, and an image display system that can improve the accuracy of identifying a marker in marker-type AR.

An image display program according to the present invention is directed to an image display program executed by a computer of an image display apparatus which displays an image, the image display program causing the computer to function as captured image acquisition means, recognition object detection means, identification information acquisition means virtual object determination means, positional relationship calculation means, virtual camera setting means, and display means. The captured image acquisition means acquires a captured image captured by imaging means. The recognition object detection means detects a predetermined recognition object from the captured image. The identification information acquisition means acquires at least first identification information and second identification information by performing a process of identification of, with respect to at least a part of an image corresponding to the recognition object in the captured image detected by the recognition object detection means, a content of at least a part of the image. The virtual object determination means determines, based on the acquired first identification information and second identification information, a virtual object from a plurality of virtual objects stored in advance in a predetermined storage medium, as a display object. The positional relationship calculation means calculates a relative positional relationship between the recognition object detected by the recognition object detection means and the imaging means. The virtual camera setting means sets, based on the positional relationship calculated by the positional relationship calculation means, a virtual camera in a virtual space. The display means displays, on a predetermined display section, an image of the virtual object determined by the virtual object determination means, which image is captured by the virtual camera.

According to the above configuration, at least first identification information and second identification information are acquired from the detected recognition object and a virtual object is determined as a display object from a plurality of virtual objects, based on the acquired at least two types of information. Therefore, an accuracy of identifying a recognition object such as a marker can be increased, and an appropriate virtual object corresponding to the recognition object can be displayed.

As another configuration example, the virtual object determination means may include verification means for verifying, by use of one of the first identification information and the second identification information, the other information, and may determine, when the other information is determined to be appropriate as a result of the verification performed by the verification means, the virtual object based on the other information which has been verified.

According to the above configuration example, one type of information of the at least two types of information acquired from the recognition object is used for verification of the other type of information. This enables more accurate identification to be performed.

Further, as another configuration example, the identification information acquisition means may acquire the first identification information by identifying a picture drawn or printed in a first region in the recognition object and may acquire the second identification information by identifying at least one of a figure, a mark, a pattern figure and a picture that has a simpler design than the picture in the first region, which are drawn or printed in a second region which is a different region from the first region.

According to the above configuration example, with respect to the second region in the recognition object, a pattern figure or the like can be drawn in consideration of a reduced possibility of occurrence of an erroneous recognition in the identification process, and with respect to the first region, a picture having a relatively complicated design can be freely drawn without particularly considering occurrence of erroneous recognition. Moreover, if the first identification information is acquired from the first region, the second identification information is acquired from the second region, and the first identification information is verified by use of the second identification information, it is possible to increase the accuracy of identifying the recognition object compared with a case where the recognition object is recognized only by means of the first identification information.

Further, as another configuration example, the verification means may verify the second identification information by use of the first identification information.

According to the above configuration example, the appropriateness of a result of identification of the second region can be verified by use of the first region in which the picture having the relatively complicated design is drawn. Therefore, it is possible to suppress modification or falsification onto the second region, and further to increase the accuracy of identifying the recognition object.

Further, as another configuration example, the identification information acquisition means may acquire the second identification information by identifying at least one of the figure, the mark, the pattern figure, and the picture which are drawn or printed in the second region and that are encoded.

According to the above configuration example, the result of the identification of the first region can be verified by use of a code of the second region, and thus it is possible to increase the identification accuracy for the first region.

Further, as another configuration example, the identification information acquisition means may acquire a plurality of pieces of candidate information as the first identification information, the verification means may verify, by use of the second identification information, the plurality of pieces of candidate information and may select one of the plurality of pieces of candidate information, based on a result of the verification, and the virtual object determination means may determine the virtual object based on the piece of candidate information selected by the verification means.

According to the above configuration example, as an identification result performed on the picture having the complicated design (first region), a plurality of candidates can be listed, and these candidates can be verified by use of an identification result of the second region in which the possibility of occurrence of an erroneous recognition is low. Accordingly, it is possible to increase the degree of freedom of the design of the recognition object itself (first region) without reducing the accuracy of identifying the recognition object, and also to enhance the design of the recognition object itself.

Further, as another configuration example,
the verification means may verify, by determining whether an information content indicated by each of the plurality of candidate information coincides with an information content indicated by the second identification information, the plurality of pieces of candidate information, and may select one of the plurality of pieces of candidate information whose information content coincides with the information content indicated by the second identification information.

According to the above configuration example, it is possible to verify the identification result through a relatively simple process.

Further, as another configuration example, the verification means may verify, by narrowing down the plurality of pieces of candidate information by use of the second identification information, the plurality of pieces of candidate information.

According to the above configuration example, it is possible to narrow down the candidates. Therefore, it is possible to further increase the identification accuracy.

Further, as another configuration example, the identification information acquisition means may acquire, of information stored in advance in the storage medium, information that has a similarity to information acquired from the picture drawn or printed in the first region, the similarity exceeding a predetermined threshold value, as the plurality of pieces candidate information, and may acquire, of information stored in advance in the storage medium, information that has a highest similarity to information acquired from the at least one of the figure, the mark, the pattern figure, and the picture that has a simpler design than the picture in the first region, which are drawn or printed in the second region, as the second identification information.

According to the above configuration example, with respect to the content drawn in the first region, it is possible to reduce the possibility that, for example, a marker that should be properly identified is not identified. Moreover, by using in the verification the second identification information for which the possibility of occurrence of an erroneous recognition is low, it is possible to reduce the possibility of occurrence of an erroneous recognition in which a marker that should not be identified is identified, and the like.

Further, as another configuration example, the identification information acquisition means may acquire a plurality of pieces of candidate information as the first identification information, and the virtual object determination means may include narrowing down means for narrowing down the plurality of pieces of candidate information by use of the second identification information, and may determine the virtual object based on a narrowed-down piece of candidate information and the second identification information.

According to the above configuration example, with respect to the content drawn in the first region, a plurality of candidates are listed as the identification result of the content, and the candidates are filtered by use of the information acquired from the second region. Therefore, it is possible to increase the identification accuracy for the first region.

Further, as another configuration example, the virtual object determination means may include verification means for verifying the narrowed-down piece of candidate information by use of the second identification information, and may determine, when the narrowed-down piece of candidate information is determined as appropriate as a result of the verification performed by the verification means, the virtual object based on the narrowed-down candidate information.

According to the above configuration example, after the plurality of candidates acquired from the content drawn in the first region are filtered, the verification is further performed. Therefore, it is possible to further increase the identification accuracy.

Further, as another configuration example, the identification information acquisition means may further acquire third identification information by performing the process of identification, and the virtual object determination means may determine the virtual object based on the acquired first identification information, second identification information, and third identification information.

According to the above configuration example, since at least three types of information are used, it is possible to increase the identification accuracy.

Further, as another configuration example, the virtual object determination means may include verification means for verifying the first identification information by use of a combination of the second identification information and the third identification information.

According to the above configuration example, it is possible to verify the appropriateness of the first identification information by use of a combination of the two types of information, that is, the second identification information and the third identification information. Therefore, it is possible to increase the accuracy of identifying the marker.

Further, as another configuration example,
the identification information acquisition means may acquire the first identification information by identifying a picture drawn or printed in a first region in the recognition object, may acquire the second identification information by identifying at least one of a figure, a mark, a pattern figure, and a picture that has a simpler design than the picture in the first region, which are drawn or printed in a second region which is a different region from the first region, and may acquire the third identification information by identifying at least one of a figure, a mark, a pattern figure, and a picture that has a simpler design than the picture in the first region, which are drawn or printed in a third region which is a different region from the first region and the second region.

According to the above configuration example, the appropriateness of the first identification information which is an identification result of the picture having the relatively complicated design can be verified by use of a combination of two types of information, that is, the second identification information and the third identification information, which are identification results of the figure, the mark, the pattern figure, and the picture having a simpler design than the picture in the first region. Therefore, it is possible to suppress modification and falsification performed onto the recognition object without impairing the design of the recognition object itself. Further, it is possible to increase the accuracy of identifying the recognition object.

Further, as another configuration example, the area of the second region and the area of the third region in the recognition object may be smaller than the area of the first region.

According to the above configuration example, it is possible to draw a complicated picture in the first region which has a larger area. Therefore, it is possible to increase the design of the recognition object, and thus it is possible to display an AR image using the recognition object having such an enhanced design.

Further, as another configuration example, the identification information acquisition means may perform identification processes that use different identification techniques from each other, respectively, between the identification process performed on the second region and the identification process performed on the third region.

According to the above configuration example, the identification process is performed by use of different identification techniques between the second region and the third region. Therefore, it is possible to reduce the possibility of occurrence of an erroneous recognition.

Further, as another configuration example, the identification information acquisition means may acquire a plurality of pieces of candidate information as the first identification information, the verification means may verify the plurality of pieces of candidate information by use of the second identification information and the third identification information, and the virtual object determination means may include selection means for selecting one of the plurality of pieces of candidate information based on a result of the verification performed by the verification means, and may determine the virtual object based on the piece of candidate information selected by the selection means.

According to the above configuration example, it is possible to increase the identification accuracy for the first region.

Further, as another configuration example, the verification means may narrow down the plurality of pieces of candidate information by use of one of the second identification information and the third identification information, and may verify a narrowed-down piece of candidate information by use of a combination of the second identification information and the third identification information.

According to the above configuration example, it is possible to increase the identification accuracy for the first region.

An image display apparatus according to the present invention is directed to an image display apparatus for displaying an image, the image display apparatus including captured image acquisition means, recognition object detection means, identification information acquisition means, virtual object determination means, positional relationship calculation means, virtual camera setting means, and display means. The captured image acquisition means acquires a captured image captured by imaging means. The recognition object detection means detects a predetermined recognition object from the captured image. The identification information acquisition means acquires at least first identification information and second identification information by performing a process of identification of, with respect to at least a part of an image corresponding to the recognition object in the captured image detected by the recognition object detection means, a content of at least a part of the image. The virtual object determination means determines, based on the acquired first identification information and second identification information, a virtual object from a plurality of virtual objects stored in advance in a predetermined storage medium, as a display object. The positional relationship calculation means calculates a relative positional relationship between the recognition object detected by the recognition object detection means and the imaging means. The virtual camera setting means sets, based on the positional relationship calculated by the positional relationship calculation means, a virtual camera in a virtual space. The display means displays, on a predetermined display section, an image of the virtual object determined by the virtual object determination means, which image is captured by the virtual camera.

An image display method according to the present invention is directed to an image display method for displaying an image, the method including a captured image acquisition step, a recognition object detection step, an identification information acquisition step, a virtual object determination step, a positional relationship calculation step, a virtual camera setting step, and a display step. The captured image acquisition step acquires a captured image captured by imaging means. The recognition object detection step detects a predetermined recognition object from the captured image. The identification information acquisition step acquires at least first identification information and second identification information by performing a process of identification of, with respect to at least a part of an image corresponding to the recognition object in the captured image detected in the recognition object detection step, a content of at least a part of the image. The virtual object determination step determines, based on the acquired first identification information and second identification information, a virtual object from a plurality of virtual objects stored in advance in a predetermined storage medium, as a display object. The positional relationship calculation step calculates a relative positional relationship between the recognition object detection in the recognition object detection step and the imaging means. The virtual camera setting step sets, based on the positional relationship calculated in the positional relationship calculation step, a virtual camera in a virtual space. The display step displays, on a predetermined display section, an image of the virtual object determined in the virtual object determination step, which image is captured by the virtual camera.

An image display system according to the present invention is a system including a marker and information processing apparatus. The information processing apparatus includes imaging means, captured image acquisition means, marker detection means, identification information acquisition means, virtual object determination means, positional relationship calculation means, virtual camera setting means, and display means. The captured image acquisition means acquires a captured image captured by the imaging means. The marker detection means detects the marker from the captured image. The identification information acquisition means acquires at least first identification information and second identification information by performing a process of identification of, with respect to at least a part of an image corresponding to the marker, in the captured image, detected by the marker detection means, a content of at least a part of the image. The virtual object determination means determines, based on the acquired first identification information and second identification information, a virtual object from a plurality of virtual objects stored in advance in a predetermined storage medium, as a display object. The positional relationship calculation means calculates a relative positional relationship between the marker detected by the marker detection means and the imaging means. The virtual camera setting means sets, based on the positional relationship calculated by the positional relationship calculation means, a virtual camera in a virtual space. The display means displays, on a predetermined display section, an image of the virtual object determined by the virtual object determination means, which image is captured by the virtual camera.

According to the present invention, it is possible to improve the identification accuracy of the marker, and to appropriately display a virtual object corresponding to the marker.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a front view of a game apparatus 10 in an opened state;
FIG. 2 is a block diagram showing an internal configuration of the game apparatus 10;
FIG. 3 is a schematic diagram showing a card 101 used in a process of the present embodiment;
FIG. 4A shows how an image of the card 101 is captured;
FIG. 4B is a schematic diagram of a captured image;
FIG. 4C is a schematic diagram of an AR image;
FIG. 5 shows main data stored in a main memory 32 of the game apparatus 10;
FIG. 6 shows an example of a data structure of a card table 201;
FIG. 7 shows an example of a data structure of a symbol pattern table 202;
FIG. 8 shows an example of a data structure of a color code table 203;
FIG. 9 shows an example of a data structure of candidate ID data 204;
FIG. 10 is a flowchart showing an overall AR image display process performed by the game apparatus 10;
FIG. 11 is a flowchart showing the overall AR image display process performed by the game apparatus 10; and
FIG. 12 is a flowchart showing in detail an ID acquisition process shown in step S4 in FIG. 10.

### DESCRIPTION OF THE PREFERRED EMBODIMENTS

Hereinafter, an embodiment of the present invention will be described with reference to the accompanying drawings. It should be noted that the present invention is not limited to that described below.

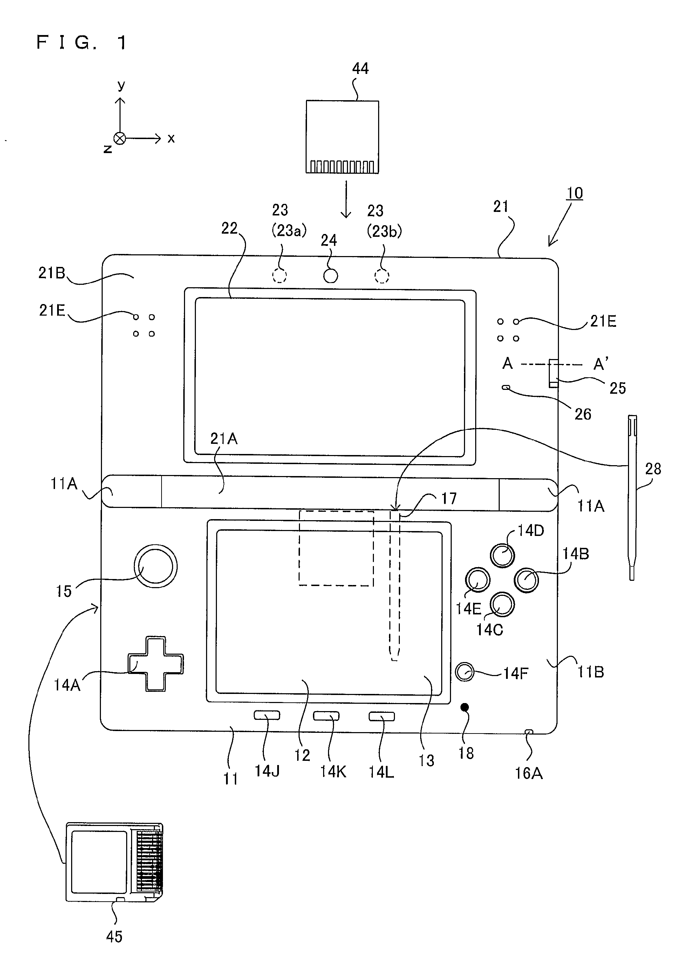

FIG. 1 shows a game apparatus 10 which is a foldable handheld game apparatus in an opened state. The game apparatus 10 has such a size as to be held by a player with both hands or one hand, even in the opened state.

The game apparatus 10 includes a lower housing 11 and an upper housing 21.

The lower housing 11 and the upper housing 21 are connected to each other so as to be capable of being opened or closed (foldable). In the example of FIG. 1, the lower housing 11 and the upper housing 21 are each formed in a plate-like shape of a horizontally long rectangle, and foldably connected to each other at long side portions thereof. Unusually, the user uses the game apparatus 10 in the opened state. When not using the game apparatus 10, the user keeps the game apparatus 10 in a closed state.

In the lower housing 11, a lower LCD (Liquid Crystal Display) 12 is provided. The lower LCD 12 has a horizontally long shape, and is located such that a long side direction thereof corresponds to a long side direction of the lower housing 11. Note that although an LCD is used as a display device provided in the game apparatus 10 in the present embodiment, any other display devices such as a display device using an EL (Electro Luminescence) and the like may be used. In addition, the game apparatus 10 can use a display device of any resolution.

In the lower housing 11, operation buttons 14A to 14L and a touch panel 13 are provided as input devices. The operation buttons 14A to 14L are each an input device for making a predetermined input. As shown in FIG. 1, among operation buttons 14A to 14L, a cross button 14A (a direction input button 14A), a button 14B, a button 14C, a button 14D, a button 14E, a power button 14F, a selection button 14J, a HOME button 14K, and a start button 14L are provided on the inner side surface (main surface) of the lower housing 11. The cross button 14A is cross-shaped, and includes buttons for indicating an upward, a downward, a leftward, or a rightward direction. The button 14B, button 14C, button 14D, and button 14E are positioned so as to form a cross shape. The button 14A to 14E, the selection button 14J, the HOME button 14K, and the start button 14L are assigned functions, respectively, in accordance with a program executed by the game apparatus 10, as necessary. For example, the cross button 14A is used for selection operation and the like, and the operation buttons 14B to 14E are used for, for example, determination operation and cancellation operation. The power button 14F is used for powering the game apparatus 10 on/off.

The analog stick 15 is a device for indicating a direction, and is provided to the left of the lower LCD 12 in an upper portion of the inner side surface of the lower housing 11. As the analog stick 15, a component which enables an analog input by being tilted by a predetermined amount, in any direction, such as the upward, the downward, the rightward, the leftward, or the diagonal direction, may be used.

Four buttons, that is, the button 14B, the button 14C, the button 14D, and the button 14E, which are positioned so as to form a cross shape, are positioned such that a thumb of a right hand with which the lower housing 11 is held is naturally positioned on the positions of the four buttons. Further, the four buttons and the analog stick 15 sandwich the lower LCD 12, so as to be bilaterally symmetrical in position with respect to each other. Thus, depending on a game program, for example, a left-handed person can make a direction instruction input by using these four buttons.

Further, a microphone hole 18 is provided on the inner side surface of the lower housing 11. Under the microphone hole 18, a microphone is provided as a sound input device described below, and the microphone detects a sound from the outside of the game apparatus 10.

In FIG. 1, the operation buttons 14G to 14I are omitted. For example, the L button 14G is provided on the left end portion of the upper side surface of the lower housing 11, and the R button 14H is provided on the right end portion of the upper side surface of the lower housing 11. The L button 14G and the R button 14H are used, for example, for performing an imaging instruction operation (shutter operation) on the game apparatus 10. In addition, the volume button 14I is provided on the left side surface of the lower housing 11. The volume button 14I is used for adjusting a sound volume of a speaker of the game apparatus 10.

The game apparatus 10 further includes the touch panel 13 as another input device in addition to the operation buttons 14A to 14K. The touch panel 13 is mounted on the screen of the lower LCD 12. In the present embodiment, for example, a resistive film type touch panel is used as the touch panel 13. However, the touch panel 13 is not limited thereto, and any press-type touch panel may be used. In the present embodiment, the touch panel 13 has, for example, the same resolution (detection accuracy) as that of the lower LCD 12. However, the resolution of the touch panel 13 and the resolution of the lower LCD 12 may not necessarily be the same. Further, an insertion opening 17 (indicated by a dotted line in FIG. 1) is provided on the upper side surface of the lower housing 11. The insertion opening 17 is used for accommodating a touch pen 28 which is used for performing an operation on the touch panel 13. Although an input on the touch panel 13 is usually made by using the touch pen 28, a finger of a user may be used for making an input on the touch panel 13, in addition to the touch pen 28.

A cover section 11C is provided on the left side surface of the lower housing 11 (not shown) so as to be openable and closable. Inside the cover section 11 C, a connector (not shown) is provided for electrically connecting between the game apparatus 10 and an external data storage memory 45. The external data storage memory 45 is detachably connected to the connector. The external data storage memory 45 is used for, for example, recording (storing) data of an image captured by the game apparatus 10. The connector and the cover section 11C may be provided on the right side surface of the lower housing 11.

Further, an insertion opening 11D (not shown) through which an external memory 44 having a game program stored therein is inserted is provided on the upper side surface of the lower housing 11. A connector (not shown) for electrically connecting between the game apparatus 10 and the external memory 44 in a detachable manner is provided inside the insertion opening 11D. A predetermined game program is executed by connecting the external memory 44 to the game apparatus 10. The connector and the insertion opening 11D may be provided on another side surface (for example, the right side surface) of the lower housing 11.

A first LED 16A for notifying the user of the power ON/OFF state of the game apparatus 10 is provided at the lower side surface of the lower housing 11, and a second LED 16B (not shown) for notifying the user whether wireless communication of the game apparatus 10 is currently established is provided at the right side surface of the lower housing 11. The game apparatus 10 is capable of performing wireless communication with other devices, and the second LED 16B is lit up while the wireless communication is established. The game apparatus 10 has a function of connecting to a wireless LAN by a method compliant with, for example, IEEE 802.11b/g standard. A wireless switch 19 (not shown) for enabling/disabling the wireless communication function is provided at the right side surface of the lower housing 11.

Meanwhile, in the upper housing 21, an upper LCD 22 is provided. The upper LCD 22 has a horizontally long shape, and is located such that a long side direction thereof corresponds to a long side direction of the upper housing 21. Similarly to the lower LCD 12, a display device of any type different from that of the upper LCD 22, or a display device having any resolution different from that of the upper LCD 22, may be used in place of the upper LCD 22. A touch panel may be provided so as to cover the upper LCD 22.

Moreover, the upper housing 21 includes the upper LCD (Liquid Crystal Display) 22, an outer imaging section 23 (an outer imaging section (left) 23 a and an outer imaging section (right) 23b), an inner imaging section 24, a 3D adjustment switch 25, and a 3D indicator 26. The upper LCD 22 has a horizontally long shape, and is located such that a long side direction thereof corresponds to a long side direction of the upper housing 21. The upper LCD 22 is positioned at the center of the upper housing 21. The area of a screen of the upper LCD 22 is set so as to be greater than the area of the screen of the lower LCD 12. Further, the screen of the upper LCD 22 is horizontally elongated as compared to the screen of the lower LCD 12.

The screen of the upper LCD 22 is provided at an inner side surface 21B (the main surface) of the upper housing 21, and the screen of the upper LCD 22 is exposed at an opening of the upper housing 21. The number of pixels of the upper LCD 22 may be, for example, 640 dots × 200 dots (the horizontal line × the vertical line). Although in the present embodiment the upper LCD 22 is a liquid crystal display device, a display device utilizing EL (Electro Luminescence) or the like may be used instead. In addition, a display device having any resolution may be used as the upper LCD 22.

The upper LCD 22 is a display device capable of displaying a stereoscopically visible image. Further, in the present embodiment, the upper LCD 22 is a display device capable of displaying an image which is stereoscopically visible with naked eyes. A lenticular lens type display device or a parallax barrier type display device is used which enables the image for a left eye and the image for a right eye, which are alternately displayed in the horizontal direction, to be separately viewed by the left eye and the right eye, respectively. In the present embodiment, the upper LCD 22 of a parallax barrier type is used. Further, the upper LCD 22 can disable the parallax barrier. When the parallax barrier is disabled, an image can be displayed in a planar manner. Thus, the upper LCD 22 is a display device capable of switching between a stereoscopic display mode for displaying a stereoscopically visible image and a planar display mode (for displaying a planar visible image) for displaying an image in a planar manner. The switching of the display mode is performed by the 3D adjustment switch 25 which is a slide switch.

Two imaging sections (23a and 23b) provided on the outer side surface (the back surface reverse of the main surface on which the upper LCD 22 is provided) 21D of the upper housing 21 are generically referred to as the outer imaging section 23. The outer imaging section (left) 23a and the outer imaging section (right) 23b are positioned to the left and to the right, respectively, of the upper LCD 22 (on the left side and the right side, respectively, of the upper housing 21) so as to be horizontally symmetrical with respect to the center of the upper LCD 22.

The inner imaging section 24 is positioned on the inner side surface (main surface) 21B of the upper housing 21, and acts as an imaging section which has an imaging direction which is the same direction as the inward normal direction of the inner side surface. The inner imaging section 24 includes an imaging device, such as a CCD image sensor and a CMOS image sensor, having a predetermined resolution, and a lens. The lens may have a zooming mechanism.

The 3D indicator 26 indicates whether or not the upper LCD 22 is in the stereoscopic display mode. The 3D indicator 26 is implemented as a LED, and is lit up when the stereoscopic display mode of the upper LCD 22 is enabled.

Further, a speaker hole 21E is provided on the inner side surface of the upper housing 21. A sound is outputted through the speaker hole 21E from a speaker 43 described below.

### (Internal configuration of game apparatus 10)

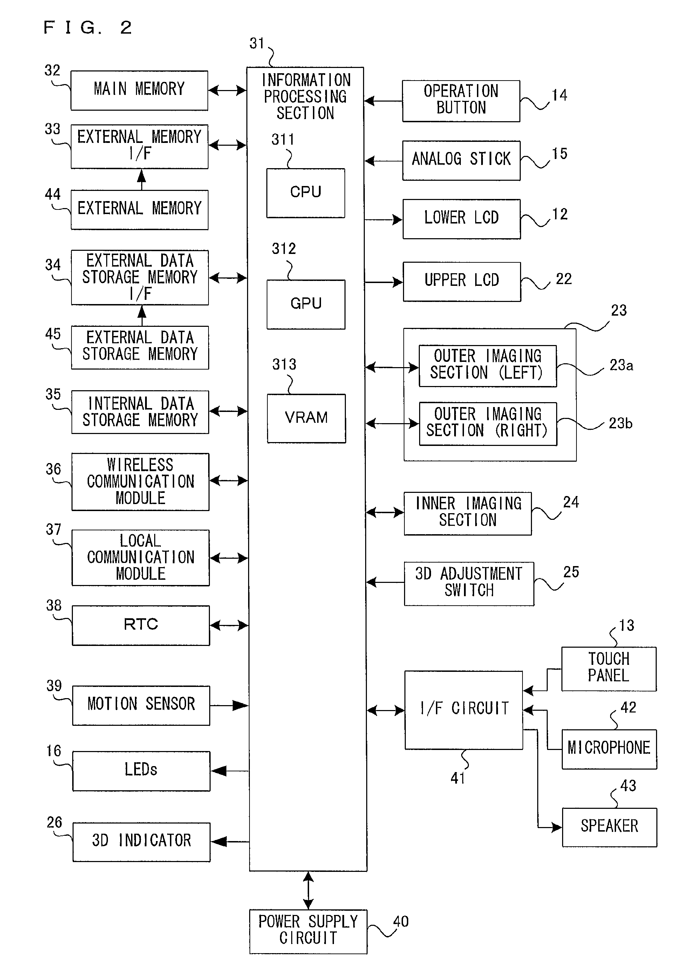

Next, an internal electrical configuration of the game apparatus 10 will be described with reference to FIG. 2. FIG. 2 is a block diagram illustrating an internal configuration of the game apparatus 10. As shown in FIG. 2, the game apparatus 10 includes, in addition to the components described above, electronic components such as an information processing section 31, a main memory 32, an external memory interface (external memory I/F) 33, an external data storage memory I/F 34, an internal data storage memory 35, a wireless communication module 36, a local communication module 37, a real-time clock (RTC) 38, a motion sensor 39, a power supply circuit 40, an interface circuit (I/F circuit) 41, and the like. These electronic components are mounted on an electronic circuit substrate, and accommodated in the lower housing 11 (or the upper housing 21).

The information processing section 31 is information processing means which includes a CPU (Central Processing Unit) 311 for executing a predetermined program, a GPU (Graphics Processing Unit) 312 for performing image processing, and the like. By executing a program stored in a memory (for example, the external memory 44 connected to the external memory I/F 33 or the internal data storage memory 35) inside the game apparatus 10, the CPU 311 of the information processing section 31 performs a process corresponding to the program. The program executed by the CPU 311 of the information processing section 31 may be acquired from another device through communication with the other device. The information processing section 31 further includes a VRAM (Video RAM) 313. The GPU 312 of the information processing section 31 generates an image in accordance with an instruction from the CPU 311 of the information processing section 31, and renders the image in the VRAM 313. The GPU 312 of the information processing section 31 outputs the image rendered in the VRAM 313, to the upper LCD 22 and/or the lower LCD 12, and the image is displayed on the upper LCD 22 and/or the lower LCD 12.

To the information processing section 31, the main memory 32, the external memory I/F 33, the external data storage memory I/F 34, and the internal data storage memory 35 are connected. The external memory I/F 33 is an interface for detachably connecting to the external memory 44. The external data storage memory I/F 34 is an interface for detachably connecting to the external data storage memory 45.

The main memory 32 is volatile storage means used as a work area and a buffer area for (the CPU 311 of) the information processing section 31. That is, the main memory 32 temporarily stores various types of data used for the process based on the above program, and temporarily stores a program acquired from the outside (the external memory 44, another device, or the like), for example. In the present embodiment, for example, a PSRAM (Pseudo-SRAM) is used as the main memory 32.

The external memory 44 is nonvolatile storage means for storing a program executed by the information processing section 31. The external data storage memory 45 is structured as a non-volatile readable and writable memory (for example, a NAND flash memory), and is used for storing predetermined data.

The internal data storage memory 35 is structured as a non-volatile readable and writable memory (for example, a NAND flash memory), and is used for storing predetermined data.

The wireless communication module 36 has a function of connecting to a wireless LAN by using a method based on, for example, IEEE 802.11.b/g standard. The local communication module 37 has a function of performing wireless communication with the same type of game apparatus in a predetermined communication method (for example, communication based on a unique protocol or infrared communication). The wireless communication module 36 and the local communication module 37 are connected to the information processing section 31. The information processing section 31 can perform data transmission to and data reception from another device via the Internet by using the wireless communication module 36, and can perform data transmission to and data reception from the same type of another game apparatus by using the local communication module 37.

The motion sensor 39 is connected to the information processing section 31. The motion sensor 39 includes an acceleration sensor and angular velocity sensor. The acceleration sensor detects magnitudes of accelerations (linear accelerations) in the directions of the straight lines along the three axial (xyz axial) directions, respectively. The angular velocity sensor detects angular velocities along the three axial (xyz-axial) directions. For example, the angular velocity sensor is a gyro-sensor and is implemented as a single chip triaxial gyro-sensor. The angular velocity sensor detects an angular velocity (angular velocity about Y-axis) (per unit time) which is the yaw angle, an angular velocity (angular velocity about Z-axis) (per unit time) which is the roll angle, and an angular velocity (angular velocity about X-axis) (per unit time) which is the pitch angle. The motion sensor 39 is provided inside the lower housing 11.

The RTC 3 8 and the power supply circuit 40 are connected to the information processing section 31. The RTC 38 counts time, and outputs the time to the information processing section 31. The information processing section 31 calculates a current time (date) based on the time counted by the RTC 38. The power supply circuit 40 controls power from the power supply (the rechargeable battery accommodated in the lower housing 11) of the game apparatus 10, and supplies power to each component of the game apparatus 10.

The I/F circuit 41 is connected to the information processing section 31. The microphone 42 and the speaker 43 are connected to the I/F circuit 41. Specifically, the speaker 43 is connected to the I/F circuit 41 through an amplifier which is not shown. The microphone 42 detects a voice from a user, and outputs a sound signal to the I/F circuit 41. The amplifier amplifies the sound signal outputted from the I/F circuit 41, and a sound is outputted from the speaker 43. The touch panel 13 is connected to the I/F circuit 41. The I/F circuit 41 includes a sound control circuit for controlling the microphone 42 and the speaker 43 (amplifier), and a touch panel control circuit for controlling the touch panel. The sound control circuit performs A/D conversion and D/A conversion on the sound signal, and converts the sound signal to a predetermined form of sound data, for example. The touch panel control circuit generates a predetermined form of touch position data based on a signal outputted from the touch panel 13, and outputs the touch position data to the information processing section 31. The touch position data represents a coordinate of a position, on an input surface of the touch panel 13, on which an input is made. The touch panel control circuit reads a signal outputted from the touch panel 13, and generates the touch position data every predetermined time. The information processing section 31 acquires the touch position data, to recognize a position on which an input is made on the touch panel 13.

The operation button 14 includes the operation buttons 14A to 14L described
above, and is connected to the information processing section 31. Operation data representing an input state of each of the operation buttons 14A to 14I is outputted from the operation button 14 to the information processing section 31, and the input state indicates whether or not each of the operation buttons 14A to 14I has been pressed. The information processing section 31 acquires the operation data from the operation button 14 to perform a process in accordance with the input on the operation button 14.

The lower LCD 12 and the upper LCD 22 are connected to the information processing section 31. The lower LCD 12 and the upper LCD 22 each display an image in accordance with an instruction from (the GPU 312 of) the information processing section 31. In the present embodiment, the information processing section 31 causes the upper LCD 22 to display a stereoscopic image (stereoscopically visible image).

The outer imaging section 23 and the inner imaging section 24 are connected to the information processing section 31. The outer imaging section 23 and the inner imaging section 24 each capture an image in accordance with an instruction from the information processing section 31, and output data of the captured image to the information processing section 31.

The 3D adjustment switch 25 is connected to the information processing section 31. The 3D adjustment switch 25 transmits, to the information processing section 31, an electrical signal in accordance with the position of a slider 25a.

The 3D indicator 26 is connected to the information processing section 31. The information processing section 31 controls whether or not the 3D indicator 26 is to be lit up. For example, the information processing section 31 lights up the 3D indicator 26 when the upper LCD 22 is in the stereoscopic display mode.

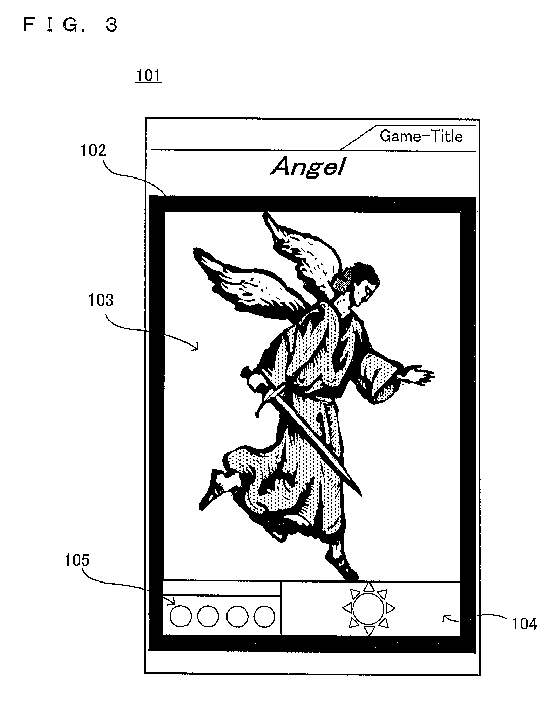

Next, with reference to FIG. 3 to FIG. 4, the outline of a card identification process performed in the game apparatus 10 will be described. In the present embodiment, a process of displaying an augmented reality image (hereinafter AR image) on the upper LCD 22 is performed by the outer imaging section 23 capturing an image of a card 101 (described later) which has a function of a marker in marker-type AR. In particular, the process described in the present embodiment is a process regarding identification of this card.

FIG. 3 is a schematic diagram showing the card 101 used in the process according to the present embodiment. In FIG. 3, a picture, a symbol, and a pattern are drawn (printed) on the card 101 as described below. That is, a black frame part 102 is drawn, and an illustration region 103, a symbol region 104, and a color code region 105 are provided in the black frame part 102. In the present embodiment, a case in which 200 types of cards are used as the type of the card will be described as an example. That is, in the process according to the present embodiment, a process for individually identifying these 200 types of cards 101 is performed.

The area of the illustration region 103 is greater than the area of the symbol region 104 and the area of the color code region 105 which are to be described below. A predetermined picture (hereinafter simply referred to as an illustration) is drawn in the illustration region 103. In the example in FIG. 3, an illustration of an angel is drawn. The illustration is typically a picture in which more colors are used than a symbol or a color code described below. The illustration has a more complicated design than the symbol or the color code described below. In the present embodiment, a predetermined character is drawn as the illustration, and a virtual object corresponding to this character is displayed as an AR image. In the present embodiment, it is assumed that the number of the characters (that is, the number of the illustrations) is 200, which is the same number as that of the types of the cards (that is, 200 illustrations).

The area of the symbol region 104 is smaller than that of the illustration region 103. In addition, in the present embodiment, the area of the symbol region 104 is a little greater than that of the color code region 105. A mark, a figure, a symbol, or a picture having a relatively simple design (hereinafter referred to as symbol) compared with the illustration is drawn in the symbol region 104. The symbol is designed so as to have clear brightness differences in colors (for example, a design for which a technique such as gradation is not used). Such a design is made so as to suppress erroneous recognition from occurring in the image recognition process described below. Moreover, in the present embodiment, the number of the types of the symbols is smaller than that of the types of the illustrations, and to be specific, the number is 5.

The area of the color code region 105 is smaller than that of the illustration region 103. Moreover, in the present embodiment, the area of the color code region 105 is smaller than that of the symbol region 104. Four circles are drawn in line in the lateral direction in the color code region 105. Each circle is filled with a predetermined color, and in the present embodiment, it is assumed that the predetermined color is one of three colors, that is, red, blue, and green. That is, each of the four circles in the color code region 105 is filled with one color selected from red, blue, and green. In other words, there are three patterns, that is, red, blue, or green, for each circle. Therefore, as a pattern figure which is a combination of these four circles (hereinafter referred to as color code), there are 81 (3 to the power of four) color codes. That is, the number of the pattern figures is smaller than that of the types of the illustrations.

The following is the reason why the number of the types of the symbols and the number of the types of the color codes are each smaller than the number of the illustrations. When the illustration is drawn, the design and the like take precedence and the image recognition process such as pattern matching is not taken into consideration. Therefore, the number of the types should not be limited in particular. Meanwhile, the symbol is drawn in a relatively simple design or pattern, and in addition, the number of the types is set to a small number. Accordingly, it is possible to design the symbol such that the possibility of occurrence of an erroneous recognition is reduced, with the image recognition process such as pattern matching taken into consideration. With respect to the color code, since only three colors, that is, red, blue, or green, are determined when the identification process regarding the color code is performed, the possibility of occurrence of an erroneous recognition is also low.

Further, in an upper part of the black frame part 102 of the card 101, the name of the character or the like drawn in the illustration region 103, and the title or the like of the game that uses the card are written.

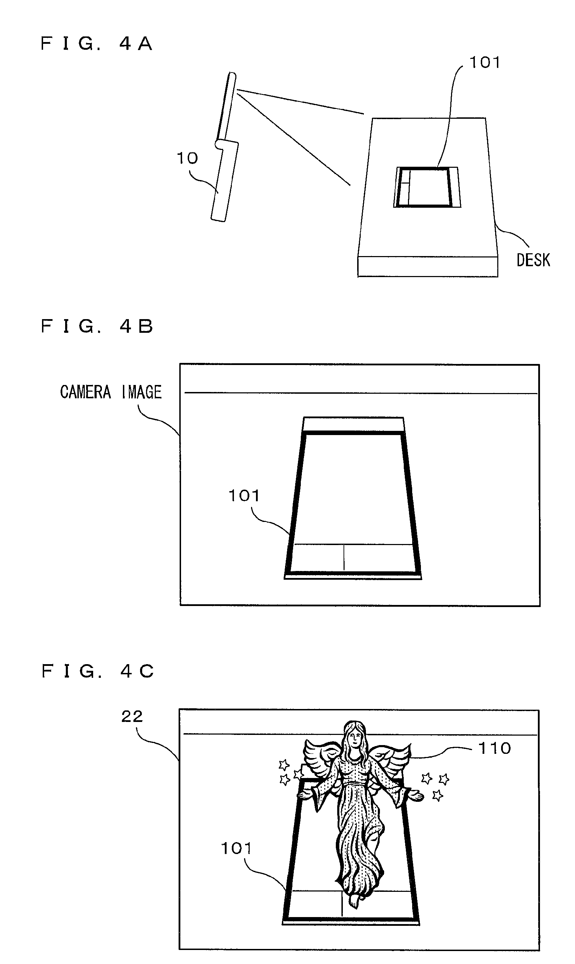

In the present embodiment, the following process is performed by use of the card 101, which has the three regions, that is, the illustration region 103, the symbol region 104, and the color code region 105 as described above. First, an image of the card 101 is captured by the outer imaging section 23 (see FIG. 4A), the illustration drawn in the illustration region is recognized based on the acquired image (see FIG. 4B), and a plurality of candidates for a first ID that correspond to the illustration are calculated. Although details will be described below, in the present embodiment, candidates for the first ID are calculated through a pattern matching process.

Next, an image recognition of the symbol region 104 is performed in a similar manner, and a second ID that corresponds to the symbol is calculated (this is also performed through the pattern matching process). Further, with respect to the color code region 105, the color code indicated by the four circles is identified, and a third ID that corresponds to the identified color code is calculated.

Then, whether an ID acquired based on the second ID and the third ID (hereinafter referred to as check ID) is present among the candidates for the first ID is checked. That is, by use of the check ID, verification of the candidates for the first ID is performed. As a result, if the check ID coincides with a candidate for the first ID, a virtual object that corresponds to the coinciding ID is determined as a virtual object to be displayed. Then, an AR image using the virtual object is generated and displayed (see FIG. 4C). In order to allow these processes to be performed, in the present embodiment, it is assumed that the first ID set for each illustration is set in advance so as to coincide with one of the check IDs acquired based on the second IDs and the third IDs. .

As described above, in the present embodiment, a matching process is performed on two IDs, that is, an ID calculated based on the illustration region 103 and an ID calculated based on the symbol region and the color code region, thereby performing a process of identifying the card. The reason of this is as follows. First, if the card is to be identified based only on the illustration drawn in the illustration region 103, the following problem may occur. First, the accuracy of identifying the card displayed in the image acquired by the outer imaging section 23 varies due to the surrounding light of the card. For example, in a case where a so-called pattern matching technique is used for the image recognition, a certain threshold value is set for the degree of coincidence in general. However, there is a problem in that if the threshold value is set to too high a value, the card cannot be properly recognized due to the varying surrounding light or the like even though an image of a valid card is being captured, and as a result, an AR image in which the virtual object described above is present is not displayed. On the other hand, if the threshold value is set to a low value, the accuracy of identifying the valid card is improved, but another card that is not a valid card but in which an illustration is drawn having a color pattern somewhat similar to that of the illustration in the valid card, may also be identified as a valid card. That is, there is a problem in that, in a case where an image of a card that is not at all relevant to a valid card is captured, the card may be identified as a valid card and the above-described AR image may be displayed when such an AR image should not be displayed.

Alternatively, as a card identification technique, a technique that uses only the color code can be considered. However, in this case, there is a following problem. That is, the user may easily infer that the card identification is performed by use of the color code drawn in the color code region 105, and as a result, the colors of the circles described above are painted with other colors, whereby another virtual object different from a virtual object that is intended to be displayed for that card may be displayed.

In view of these problems, in the present embodiment, verification (matching in the present embodiment) is performed on an ID acquired from the illustration region 103, by use of an ID acquired based on both of the symbol region 104 and the color code region 105, whereby the card identification is performed. Accordingly, the accuracy of distinguishing a valid card from other cards can be improved.

Here, the reason why a plurality of candidates are calculated for the ID acquired from the illustration region 103 is as follows. The illustration is a picture having a relatively complicated design as described above, and if the type of the card is to be uniquely specified by determining the illustration only, there remains a possibility that the illustration is erroneously recognized as another illustration that has similar colors, due to the surrounding light or the like. Therefore, a plurality of candidates are once calculated for the first ID, and then these candidates are verified against the second ID and the third ID, and as a result, the accuracy of identifying the illustration is improved.

In addition, that an AR image not intended (by the developer) to be displayed is displayed, which is caused by the color code being modified by the user, can be prevented.

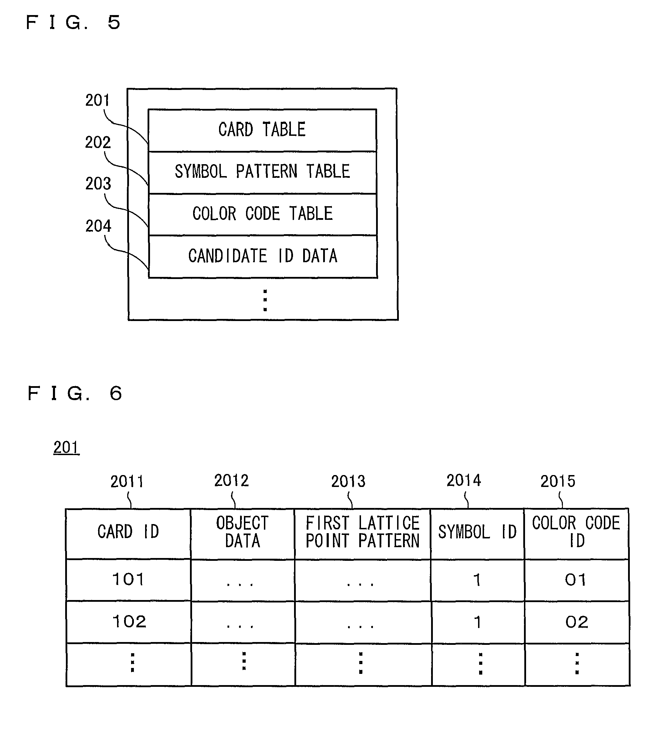

Next, the card identification process performed in the game apparatus 10 will be described in detail. First, with reference to FIG. 5, main data used in the present process will be described. FIG. 5 shows main data stored in the main memory 32 of the game apparatus 10. With reference to FIG. 5, the main memory 32 stores a card table 201, a symbol pattern table 202, a color code table 203, a candidate ID data 204, and the like. The card table 201, the symbol pattern table 202, and the color code table 203 are those that have been stored in advance, for example, in the external memory 44 and that are copied to the main memory 32 when the process according to the present embodiment is performed. Meanwhile, the candidate ID data 204 is a temporary file generated as necessary in the course of performance of the process.

The card table 201 is a table showing correspondence between the cards 101 as described above and virtual objects 110 and the like shown in the cards 101. FIG. 6 shows an example of a data structure of the card table 201. The card table shown in FIG. 6 is structured to include a card ID 2011, an object data 2012, a first lattice point pattern 2013, a symbol ID 2014, and a color code ID 2015.

The card ID 2011 corresponds to the first ID described above, and is an ID for uniquely identifying a corresponding card 101. As described above, in the present embodiment, the number of the card IDs 2011 is 200.

The object data 2012 is data regarding the above virtual object corresponding to the card, and for example, polygon model data and texture data. Alternatively, such modeling data is generated as another file, and the object data 2012 may store information for identifying (specifying) each object with reference to said another file.

The first lattice point pattern 2013 is data used when the illustration drawn in the illustration region 103 is identified by pattern matching. In the present embodiment, as the pattern matching technique, the illustration region 103 is divided into a grid of 16 sections (vertical direction × horizontal direction), pixels at intersection points of vertical lines and horizontal lines, that is, pixels at lattice points, are extracted, and then pattern matching is performed by use of these pixels. Accordingly, the first lattice point pattern 2013 is data in which, for example, values indicating the color information of the pixels at the lattice points are listed in the order from the upper left to the lower right of the lattice point positions.

The symbol ID 2014 corresponds to the second ID, and is an ID that corresponds to the symbol drawn in the symbol region 104 of the card 101. In the present embodiment, since five types of the symbols are used, one of the five types of the symbols is defined as the symbol ID 2014.

The color code ID 2015 corresponds to the third ID, and is an ID that corresponds to the color code drawn in the color code region 105 of the card 101. In the present embodiment, since there are 81 patterns of the color codes at maximum and 40 patterns of the 81 patterns are used, one of the 40 patterns is defined as the color code ID 2015.

FIG. 6 shows an example in which the ID represented by the card ID 2011 and an ID generated by combining the value of the symbol ID 2014 and the value of the color code ID 2015 (the check ID) are defined to coincide with each other. This configuration is provided so that, in the present embodiment, as described above, the process of determining coincidence between the first ID and the check ID acquired based on the second and the third IDs can be performed when a virtual object is determined. For example, in a case where the value of the symbol ID 2014 can take one of 1 to 5 and the value of the color code ID 2015 can take one of 1 to 80, if the card ID 2011 is defined as "102", the symbol ID is defined as "1" and the color code ID is defined as "02". However, the manner of creating an ID is not limited thereto, and in another embodiment, for example, numbers may be used for the symbol ID 2014 and the color code ID 2015 and a character string may be used for the card ID 2011. That is, any manner of creating an ID may be used for the card table 201, as long as the card ID 2011 is uniquely identified based on the symbol ID 2014 and the color code ID 2015.

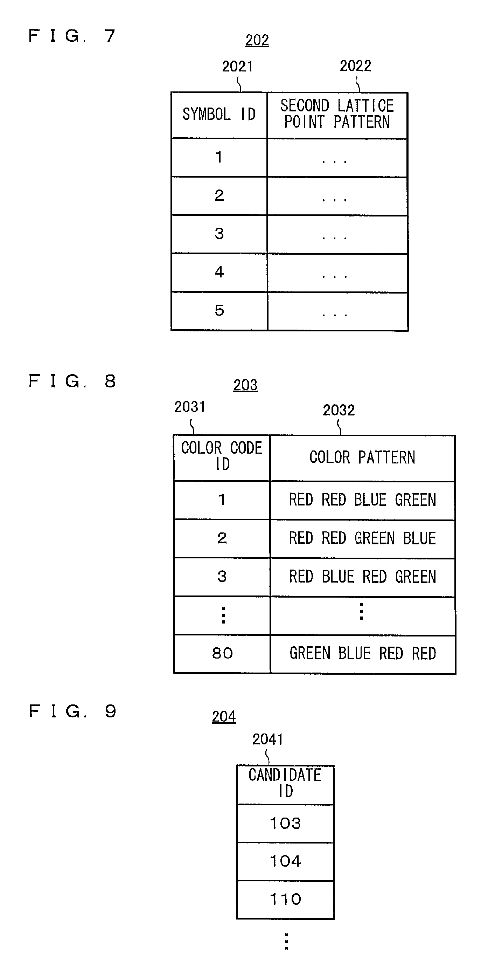

Next, FIG. 7 shows an example of a data structure of the symbol pattern table 202. The symbol pattern table 202 is structured to include a symbol ID 2021 and a second lattice point pattern 2022.

The symbol ID 2021 is an ID that corresponds to the second ID (the symbol ID 2014). The second lattice point pattern 2022 is data used in identifying the symbol through pattern matching. Also with respect to the pattern matching performed on the symbol, as in the case of the illustration, the image of the symbol is divided into lattice form, and the colors of pixels at lattice points are used. Therefore, also in this data, information indicating the colors of the pixels of the lattice points is defined.

Next, FIG. 8 shows an example of a data structure of the color code table 203. The color code table 203 is structured to include a color code ID 2031 and a color pattern 2032.

The color code ID 2031 is an ID that corresponds to the third ID (the color code ID 2015). The color pattern 2032 is data used in identifying the color code. With respect to identification of the color code, the colors of the four circles in the camera image are acquired, and the sequence of the colors is determined, whereby the color code is determined. Therefore, in this data, for example, information representing the pattern of the sequence of colors, such as "red, red, blue, green", or "red, red, green, blue" is defined.

Next, FIG. 9 shows an example of a data structure of the candidate ID data 204. The candidate ID data 204 includes a candidate ID 2041. In the present embodiment, with respect to the card IDs, as a result of the pattern matching performed on the illustration region 103, card IDs 2011 having similarities (scores) greater than or equal to a predetermined threshold value are acquired. The candidate ID 2041 is composed of these acquired card IDs 2011 sorted in the descending order in terms of the similarity.

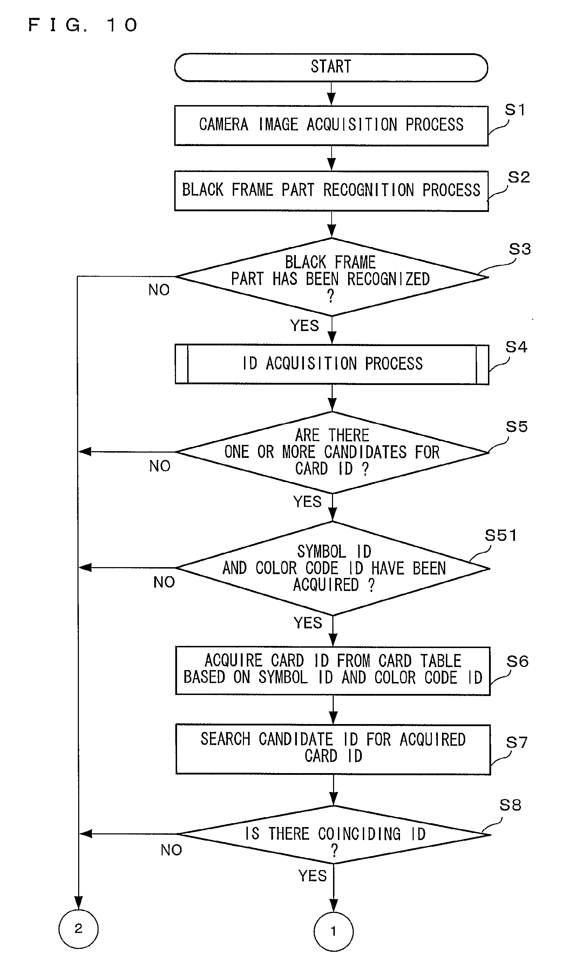

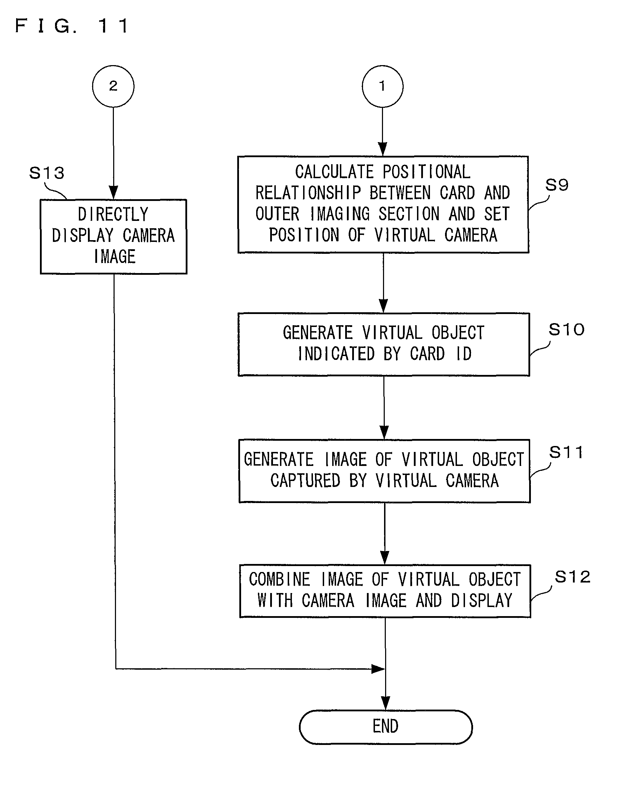

Next, with reference to FIG. 10 to FIG. 12, an AR image display process performed by the game apparatus 10 will be described. FIG. 10 to FIG. 11 are a flowchart showing an overall AR image display process performed by the game apparatus 10. The performance of the process is stared when the process is called as necessary during performance of a predetermined game processing. For example, the performance of the process is started when a user selects an item "card identification mode" from a menu screen of a game.

First, in step S1, a process of acquiring a camera image which is an image captured by use of the outer imaging section 23 is performed. At this time, the upper LCD 22 is displaying in real time the image being captured by the outer imaging section 23. Further, at this time, the user holds the game apparatus 10 and adjusts as appropriate the imaging distance to the card 101 by moving the game apparatus 10.

Next, in step S2, a process of recognizing the black frame part 102 from the camera image is performed. Specifically, a process for acquiring coordinates at four corners of the black frame part 102 in the camera image is performed. Since the basic controlling manners and the like for recognizing the black frame part 102 is known to a person skilled in the art, detailed description thereof will be omitted.

Next, in step S3, as a result of the process in step S2, it is determined whether the black frame part 102 has been recognized. As a result, if the black frame part 102 has not been recognized (NO in step S3), the process is advanced to step S13. On the other hand, if the black frame part 102 has been recognized (YES in step S3), the camera image at this time is stored as appropriate in the main memory 32, and an ID acquisition process using this camera image is performed in step S4. This process is a process for acquiring, based on the image inside the black frame part 102, IDs corresponding to the three regions described above, respectively.

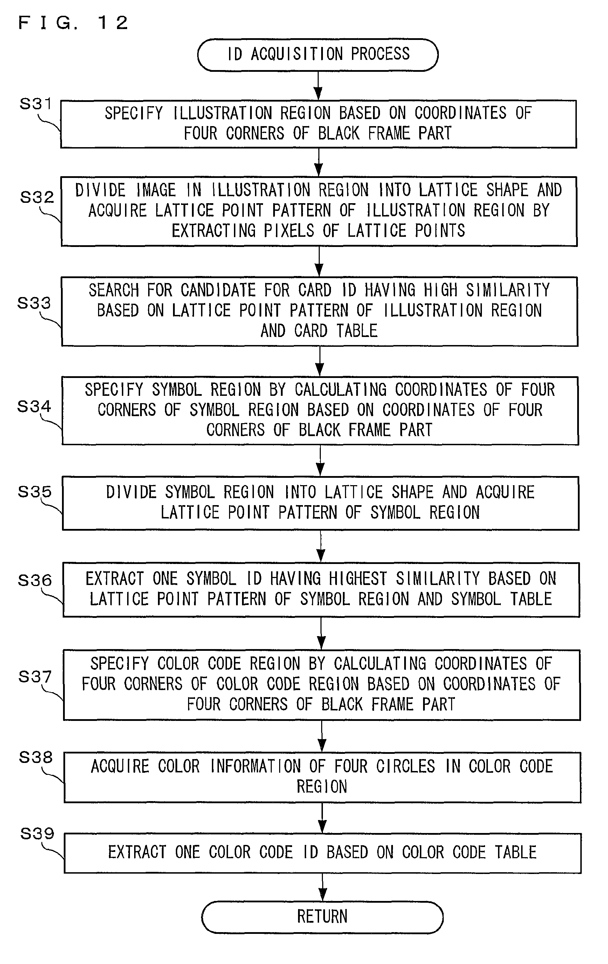

FIG. 12 is a flowchart showing in detail the ID acquisition process shown in step S4. First, in step S31, based on the coordinates of the four corners of the black frame part 102 acquired in step S2, a process of specifying the illustration region 103 in the camera image is performed.

Next, the pattern matching process regarding the illustration in the illustration region 103 is performed. First, in step S32, the image in the specified illustration region 103 is divided into a lattice shape that is defined in advance (for example, a grid of 16 sections in the vertical direction × horizontal direction), and then, pixels at the lattice points are extracted. As a result, a lattice point pattern indicating the colors of the pixels at the lattice points is acquired.

Next, in step S33, the card table 201 is referred to, and pattern matching between the first lattice point pattern 2013 and the lattice point pattern extracted in step S32 is performed. Then, the card IDs 2011 having similarities greater than or equal to a predetermined threshold value are searched for. Then, the search result is sorted in the descending order in terms of the similarity, and stored as the candidate ID data 204 in the main memory 32. In this process, in a case where the number of the search result is 0 (for example, in such a case where an image of a card for another game has been captured), the candidate ID data 204 containing 0 item (that is, empty file) is generated. The reason why a plurality of card IDs 2011 having similarities greater than or equal to a predetermined threshold value are acquired (to be used as candidate IDs) is that the illustration is a picture having a complicated design, and is not drawn in consideration of the image identification process in particular. That is, if the illustration is to be uniquely specified only by the pattern matching, there is a possibility of occurrence of an erroneous recognition, and therefore, a plurality of card IDs 2011 having higher similarities are extracted as candidates.

With respect to the processes in steps S32 and S33, in another embodiment, the illustration region 103 may not be specified as described above, but instead, pattern matching may be simply performed by use of the lattice points as described above onto the whole of the inside of the black frame part 102 (the region including all of the illustration region 103, the symbol region 104 and the color code region 105). Further, also with respect to the pattern matching technique, the process method using the lattice points as described above is merely one example, and is not limited thereto. Any process method may be used as long as the illustration can be recognized.

After extraction of the candidate IDs for the illustration region 103 has been ended, next, an ID acquisition process for the symbol region 104 is performed. First, in step S34, based on the coordinates of the four corners of the black frame part 102, the symbol region 104 in the camera image is specified. That is, the coordinates of four corners of the symbol region 104 is calculated. Then, in step S35, from the specified symbol region 104, pixels of the lattice points as described above are extracted, and a lattice point pattern of the symbol region 104 is acquired.

Next, in step S36, pattern matching is performed by referring to the second lattice point pattern 2022 in the symbol pattern table 202, and a symbol ID 2021 corresponding to the lattice point pattern of the above symbol region 104 is acquired. As described above, the symbol is not a complicated picture compared with the illustration, and the number of the types is small. Therefore, the possibility of occurrence of an erroneous recognition in the pattern matching is low. Accordingly, here, as a result of the pattern matching, the symbol ID 2021 corresponding to the symbol that has the highest similarity is acquired.

After the symbol ID 2021 has been acquired, then, an ID acquisition process for the color code region 105 is performed. First, in step S37, based on the coordinates of the four corners of the black frame part 102, the color code region 105 in the camera image is specified. That is, the coordinates of four corners of the color code region 105 are calculated. In the next step S38, for each of the four circles in the specified color code region 105, predetermined pixels in the respective circles are acquired. Then, it is determined what color, among red, blue, and green, each pixel is. Accordingly, the color code indicated by the four circles is acquired.

Next, in step S39, the color code table 203 is referred to, and a color code ID 2031 corresponding to the color code acquired in step S38 is acquired. The determination of the color code in the present embodiment is performed through identification of the three colors, that is, red, blue, and green. Therefore, the possibility of the color code being erroneously recognized is low. Then, the ID acquisition process ends.

With reference back to FIG. 10, next, in step S5, the candidate ID data 204 is referred to and it is determined whether there is one or more candidates for the card ID (that is, the candidate IDs 2041). As a result, if there is no candidate (NO in step S5), the process is advanced to step S 13 described below. On the other hand, when there are one or more candidates for the card ID (YES in step S5), then, in step S51, it is determined whether the symbol ID 2021 and the color code ID 2031 have been acquired in the process in step S4. As a result, if one of the symbol ID 2021 and the color code ID 2031 has not been acquired (NO in step S51), the process is advanced to step S13 described below. On the other hand, if the symbol ID 2021 and the color code ID 2031 both have been acquired (YES in step S51), then, in step S6, the card table 201 is searched based on the symbol ID 2021 and the color code ID 2031, and the card ID 2011 of a card 101 whose symbol ID and color ID coincide with the above symbol ID 2021 and the above color code ID 2031, respectively, is acquired as the check ID.

Next, in step S7, a process is performed in which the candidate ID data 204 is referred to and a candidate ID 2041 that coincides with the check ID is searched for. In the next step S8, it is determined whether a candidate ID 2041 that coincides with the check ID has been found as a result of the search. As a result, if such a candidate ID 2041 has not been found (NO in step S8), the process is advanced to step S13 described below.

On the other hand, if such a candidate ID 2041 has been found (YES in step S8), a process for generating and displaying an AR screen by use of the virtual object 110 represented by the found candidate ID 2041 is performed. First, in step S9, the relative positional relationship (distance, orientation, and the like) between the card 101 and the outer imaging section 23 is calculated. This is calculated, for example, based on the coordinates of the four corners of the black frame part 102 in the camera image. Then, based on the positional relationship, the position and orientation of the virtual camera in the virtual space are set.

Next, in step S10, the card table 201 is referred to, and a record having a card ID 2011 that has the same value as the candidate ID 2041 is searched for. Then, based on the object data 2012 of the found record, a virtual object is determined.

Next, in step S11, the virtual object 110 is arranged as appropriate in the virtual space. Then, by an image of the virtual object being captured by the virtual camera, an image of the virtual obj ect 110 is generated.

Next, in step S12, the camera image and the image of the virtual object 110 are combined, whereby the AR image is generated. Then, the AR image is displayed on the upper LCD 22.

On the other hand, as a result of the determination in step S5, in a case where no candidate for the card has been found (NO in step S5) or in a case where no candidate ID that coincides with the check ID has been found in the candidate ID data 204 (NO in step S8), the camera image is directly displayed on the upper LCD 22 in step S 13. That is, in this case, the virtual object 110 is not displayed.

This is the end of the description of the AR image display process according to the present embodiment.

As described above, in the present embodiment, three types of IDs, that is, a (or candidates of) ID acquired from the illustration, an ID acquired from the symbol, and an ID acquired from the color code, are acquired from one card 101 (marker). Then, the ID acquired from the illustration is verified by use of the other IDs, whereby the card is identified and a virtual object to be display is determined. Accordingly, the accuracy of identifying the card 101 as a marker can be increased, and as a result, with respect to the virtual object to be displayed when an image of the card is captured, the virtual object to be displayed can be more accurately determined and then displayed.

It should be noted that in the above embodiment, performed is a process of matching the check ID acquired based on the symbol and the color code against a plurality of candidate IDs acquired by identifying the illustration. At this time, the matching may be performed after the candidate IDs are filtered. For example, the candidate IDs are narrowed down by use of the symbol ID only. Then, the matching using the above check ID may be performed onto the result. Alternatively, the candidate IDs may be narrowed down by use of the symbol ID only, and a candidate ID that has the highest similarity may be extracted from the narrowed-down result and employed.

In the above embodiment, the example in which three types of IDs are used has been described. However, the IDs are not limited thereto, and for example, a configuration may be employed in which two types of IDs are used. For example, a configuration may be employed in which the color code ID is omitted from the IDs used in the embodiment. For example, a configuration may be employed in which the symbol ID is omitted from the IDs used in the above embodiment. In this case, IDs acquired from the illustration are verified by use of an ID acquired from the color code. Therefore, the number of the circles in the color code region may be increased to, for example, six. It is understood that four or more types of IDs may be used.

In the above embodiment, the example has been described that employs the symbol and the color code which each have a relatively simple design or pattern, compared with the illustration which has a relatively complicated design. However, the symbol and the color code are not limited thereto. For example, instead of the symbol and the color code, a so-called two dimensional code image may be used. For example, a configuration may be employed in which only the illustration and the two dimensional code image may be used. Alternatively, a combination of the illustration, the symbol, and the two dimensional code, or a combination of the illustration, the two dimensional code, and the color code may be employed.

In the above embodiment, as a verification method of an ID acquired from the illustration region 103, the example has been described in which whether the ID acquired from the illustration region 103 matches the check ID (whether they coincide with each other) is determined. However, the verification method is not limited thereto. For example, a configuration may be employed in which, based on the symbol ID and the color code ID, a value used as a so-called checksum is calculated. Then, by use of the checksum value, the ID acquired from the illustration region 103 is verified, whereby the card may be identified and the virtual object may be determined.

Further, in the above embodiment, the example has been described in which performed is a verification process in which the ID acquired from the illustration region 103 is verified by use of the ID acquired from the other regions. However, the relationship between these IDs may be reversed, that is, the ID acquired form the illustration region 103 may be used for an ID for verifying (the card ID calculated based on) the ID acquired from the other regions. In this case, for example, in a case where the color code is modified by the user, by verifying the color code by use of the ID acquired from the illustration (since the illustration is a complicated picture, it is difficult to be modified), it is possible to find such a modification of the color code. That is, it is possible to prevent modification of the color code.

Moreover, in the above embodiment, the augmented reality is realized by use of a video see-through method. That is, in the present embodiment, an image captured by the outer imaging section 23 and an image captured by the virtual camera (left and right virtual cameras) are combined together and a superimposed image is generated, which is then displayed on the upper LCD 22. However, in another embodiment, an augmented reality may be realized by use of an optical see-through method. For example, in the optical see-through method, a user wears a head mount display including a camera for detecting a marker placed in a real space, and the user can view the real space through the display section corresponding to the lens part of glasses. This display section is composed of a material that allows the real space to be directly viewed, through the display section, by the eyes of the user. Further, this display section is configured to be able to display an image of a virtual object generated by a computer.

Further, in the above embodiment, the card 101 is used as a marker to be recognized. However, in another embodiment, an image having a similar color to that of the card 101 is displayed on a display device different from the game apparatus 10, and an image of the displayed image is captured by the outer imaging section 23. Then, based on the acquired image, an ID of an object to be recognized is acquired, and then a virtual object corresponding to the ID may be determined as the object to be displayed.

Further, in the above embodiment, the case has been described in which the card 101 is identified, and a series of processes for displaying a virtual object corresponding to the identified card 101 are performed in a single apparatus (the game apparatus 10). However, in another embodiment, the series of processes may be performed in an information processing system including a plurality of information processing apparatuses. For example, in an information processing system including a terminal side apparatus, and a server side apparatus that is communicable with the terminal side apparatus via a network, a part of the series of processes may be performed by the server side apparatus. Alternatively, in the information processing system including a terminal side apparatus and a server side apparatus communicable with the terminal side apparatus via a network, main processes of the series of processes may be performed by the server side apparatus and a part of the processes may be performed by the terminal side apparatus. Still alternatively, in the information processing system, the server side system may be configured with a plurality of information processing apparatuses, and the processes to be performed in the server side system may be divided and performed by the plurality of information processing apparatuses.

While the invention has been described in detail, the foregoing description is in all aspects illustrative and not restrictive. It is understood that numerous other modifications and variations can be devised without departing from the scope of the invention.

## Claims

1. An image display program executed by a computer of an image display apparatus which displays an image, the image display program causing the computer to function as:
captured image acquisition means (S1) for acquiring a captured image captured by imaging means;
recognition object detection means (S2) for detecting a predetermined recognition object from the captured image;
identification information acquisition means (S4) for acquiring at least first identification information and second identification information by performing a process of identification of, with respect to at least a part of an image corresponding to the recognition object in the captured image detected by the recognition object detection means, a content of at least a part of the image;
virtual object determination means (S6, S7, S8) for determining, based on the acquired first identification information and second identification information, a virtual object from a plurality of virtual objects stored in advance in a predetermined storage medium, as a display object;
positional relationship calculation means (S9) for calculating a relative positional relationship between the recognition object detected by the recognition object detection means and the imaging means;
virtual camera setting means (S9) for setting, based on the positional relationship calculated by the positional relationship calculation means, a virtual camera in a virtual space; and
display means (S10, S11, S12) for displaying, on a predetermined display section, an image of the virtual object determined by the virtual object determination means, which image is captured by the virtual camera.

2. The image display program according to claim 1, wherein
the virtual object determination means
includes verification means (S6, S7, S8) for verifying, by use of one of the first identification information and the second identification information, the other information, and
determines, when the other information is determined to be appropriate as a result of the verification performed by the verification means, the virtual object based on the other information which has been verified.

3. The image display program according to claim 2, wherein
the identification information acquisition means acquires the first identification information by identifying a picture drawn or printed in a first region in the recognition object and acquires the second identification information by identifying at least one of a figure, a mark, a pattern figure and a picture that has a simpler design than the picture in the first region, which are drawn or printed in a second region which is a different region from the first region.

4. The image display program according to claim 3, wherein
the verification means verifies the second identification information by use of the first identification information.

5. The image display program according to claim 3 or claim 4, wherein
the identification information acquisition means acquires the second identification information by identifying at least one of the figure, the mark, the pattern figure, and the picture which are drawn or printed in the second region and that are encoded.

6. The image display program according to claim 3, wherein
the identification information acquisition means acquires a plurality of pieces of candidate information as the first identification information,
the verification means verifies, by use of the second identification information, the plurality of pieces of candidate information and selects one of the plurality of pieces of candidate information, based on a result of the verification, and
the virtual object determination means determines the virtual object based on the piece of candidate information selected by the verification means.

7. The image display program according to claim 6, wherein
the verification means verifies, by determining whether an information content indicated by each of the plurality of candidate information coincides with an information content indicated by the second identification information, the plurality of pieces of candidate information, and selects one of the plurality of pieces of candidate information whose information content coincides with the information content indicated by the second identification information.

8. The image display program according to claim 6, wherein
the verification means verifies, by narrowing down the plurality of pieces of candidate information by use of the second identification information, the plurality of pieces of candidate information.

9. The image display program according to claim 6, wherein
the identification information acquisition means
acquires, of information stored in advance in the storage medium, information that has a similarity to information acquired from the picture drawn or printed in the first region, the similarity exceeding a predetermined threshold value, as the plurality of pieces candidate information, and
acquires, of information stored in advance in the storage medium, information that has a highest similarity to information acquired from the at least one of the figure, the mark, the pattern figure, and the picture that has a simpler design than the picture in the first region, which are drawn or printed in the second region, as the second identification information.

10. The image display program according to claim 1, wherein
the identification information acquisition means acquires a plurality of pieces of candidate information as the first identification information, and
the virtual object determination means
includes narrowing down means for narrowing down the plurality of pieces of candidate information by use of the second identification information, and
determines the virtual object based on a narrowed-down piece of candidate information and the second identification information.

11. The image display program according to claim 10, wherein
the virtual object determination means
includes verification means for verifying the narrowed-down piece of candidate information by use of the second identification information, and
determines, when the narrowed-down piece of candidate information is determined as appropriate as a result of the verification performed by the verification means, the virtual object based on the narrowed-down candidate information.

12. The image display program according to claim 1, wherein
the identification information acquisition means further acquires third identification information by performing the process of identification, and
the virtual object determination means determines the virtual object based on the acquired first identification information, second identification information, and third identification information.

13. The image display program according to claim 12, wherein
the virtual object determination means includes verification means for verifying the first identification information by use of a combination of the second identification information and the third identification information.

14. The image display program according to claim 13, wherein
the identification information acquisition means acquires the first identification information by identifying a picture drawn or printed in a first region in the recognition object, acquires the second identification information by identifying at least one of a figure, a mark, a pattern figure, and a picture that has a simpler design than the picture in the first region, which are drawn or printed in a second region which is a different region from the first region, and acquires the third identification information by identifying at least one of a figure, a mark, a pattern figure, and a picture that has a simpler design than the picture in the first region, which are drawn or printed in a third region which is a different region from the first region and the second region.

15. The image display program according to claim 14, wherein
the area of the second region and the area of the third region in the recognition object are smaller than the area of the first region.

16. The image display program according to claim 14 or claim 15, wherein the identification information acquisition means performs identification processes that uses different identification techniques from each other, respectively, between the identification process performed on the second region and the identification process performed on the third region.

17. The image display program according to any one of claim 14 to claim 16,
wherein
the identification information acquisition means acquires a plurality of pieces of candidate information as the first identification information,
the verification means verifies the plurality of pieces of candidate information by use of the second identification information and the third identification information, and
the virtual object determination means
includes
selection means for selecting one of the plurality of pieces of candidate information based on a result of the verification performed by the verification means, and
determines the virtual object based on the piece of candidate information selected by the selection means.

18. The image display program according to claim 17, wherein
the verification means narrows down the plurality of pieces of candidate information by use of one of the second identification information and the third identification information, and verifies a narrowed-down piece of candidate information by use of a combination of the second identification information and the third identification information.

19. An image display apparatus (10) for displaying an image, the image display apparatus comprising:
captured image acquisition means (31) for acquiring a captured image captured by imaging means (23);
recognition object detection means (31) for detecting a predetermined recognition object from the captured image;
identification information acquisition means (31) for acquiring at least first identification information and second identification information by performing a process of identification of, with respect to at least a part of an image corresponding to the recognition object in the captured image detected by the recognition object detection means, a content of at least a part of the image;
virtual object determination means (31) for determining, based on the acquired first identification information and second identification information, a virtual object from a plurality of virtual objects stored in advance in a predetermined storage medium, as a display obj ect;
positional relationship calculation means (31) for calculating a relative positional relationship between the recognition object detected by the recognition object detection means and the imaging means;
virtual camera setting means (31) for setting, based on the positional relationship calculated by the positional relationship calculation means, a virtual camera in a virtual space;
and
display means (31) for displaying, on a predetermined display section (22), an image of the virtual object determined by the virtual object determination means, which image is captured by the virtual camera.

20. An image display method for displaying an image, the method comprising:
a captured image acquisition step (S1) of acquiring a captured image captured by imaging means;
a recognition object detection step (S2) of detecting a predetermined recognition object from the captured image;
an identification information acquisition step (S4) of acquiring at least first identification information and second identification information by performing a process of identification of, with respect to at least a part of an image corresponding to the recognition object in the captured image detected in the recognition object detection step, a content of at least a part of the image;
a virtual object determination step (S6, S7, S8) of determining, based on the acquired first identification information and second identification information, a virtual object from a plurality of virtual objects stored in advance in a predetermined storage medium, as a display object;
a positional relationship calculation step (S9) of calculating a relative positional relationship between the recognition object detection in the recognition object detection step and the imaging means;
a virtual camera setting step (S9) of setting, based on the positional relationship calculated in the positional relationship calculation step, a virtual camera in a virtual space; and
a display step (S 10, S11, S12) of displaying, on a predetermined display section, an image of the virtual object determined in the virtual object determination step, which image is captured by the virtual camera.

21. An image display system including a marker (101) and an information processing apparatus (10), wherein
the information processing apparatus includes:
imaging means (23);
captured image acquisition means (31) for acquiring a captured image captured by the imaging means;
marker detection means (31) for detecting the marker from the captured image;
identification information acquisition means (31) for acquiring at least first identification information and second identification information by performing a process of identification of, with respect to at least a part of an image corresponding to the marker, in the captured image, detected by the marker detection means, a content of at least a part of the image;
virtual object determination means (31) for determining, based on the acquired first identification information and second identification information, a virtual object from a plurality of virtual objects stored in advance in a predetermined storage medium, as a display object;
positional relationship calculation means (31) for calculating a relative positional relationship between the marker detected by the marker detection means and the imaging means;
virtual camera setting means (31) for setting, based on the positional relationship calculated by the positional relationship calculation means, a virtual camera in a virtual space; and
display means (31) for displaying, on a predetermined display section, an image of the virtual object determined by the virtual object determination means, which image is captured by the virtual camera.
